# EUROPÄISCHE PATENTSCHRIFT

(11) **EP 2 497 065 B1**
(45) Veröffentlichungstag und Bekanntmachung des Hinweises auf die Patenterteilung: **09.04.2014**
(21) Anmeldenummer: 10792809.5
(22) Anmeldetag: 02.11.2010
(51) Int. Cl.: G06T 7/00

(54) **VERFAHREN ZUR BESTIMMUNG DER AUSRICHTUNG EINES OBEREN TEILS EINES STÜCKGUTSTAPELS**
METHOD OF DETERMINING THE ORIENTATION OF THE UPPER PART OF A STACK OF WORKPIECES
PROCÉDÉ POUR DÉTERMINER L'ORIENTATION DE LA PARTIE SUPÉRIEURE D'UNE PILE DE CHARGES ISOLÉES

(30) Priorität: 02.11.2009 AT 17252009
(43) Veröffentlichungstag der Anmeldung: 12.09.2012
(73) Patentinhaber: TRUMPF Maschinen Austria GmbH & Co. KG., 4061 Pasching (AT)
(72) Erfinder: LUSTIG, Stefan, A-4020 Linz (AT)
(74) Vertreter: Burger, Hannes
(86) Internationale Anmeldenummer: PCT/AT2010/000414
(87) Internationale Veröffentlichungsnummer: WO 2011/050383

(56) Entgegenhaltungen:
- EP-A1- 1 681 111
- EP-A2- 1 589 483
- DE-A1-102005 022 344
- NAI-YUNG CHEN ET AL: "Estimating workpiece pose using the feature points method", IEEE TRANSACTIONS ON AUTOMATIC CONTROL USA, Bd. AC-25, Nr. 6, Dezember 1980 (1980-12), Seiten 1027-1041, XP002630083, ISSN: 0018-9286

## Beschreibung

Die Erfindung betrifft ein Verfahren zur Bestimmung der Ausrichtung eines oberen Teils eines Stückgutstapels, insbesondere eines Blechstapels.

Werkzeugmaschinen wie beispielsweise Biegepressen erfordern die selektive Zuführung einzelner Werkteile, wobei insbesondere auf eine korrekte Ausrichtung des Werkteils in Relation zur Werkzeugmaschine geachtet werden muss. Bei einem nicht- oder nur teilautomatisierten Biegeplatz wird das Werkteil beispielsweise von einer automatischen Zuführvorrichtung zur Biegepresse zugefördert, die korrekte Ausrichtung des Werkteils in Relation zur Biegepresse muss dann jedoch von einem Bediener vorgenommen werden. Bei einem automatisierten Biegeablauf sind Maßnahmen erforderlich, um die korrekte Ausrichtung des Werkteils in Relation zur Biegepresse sicher zu stellen. Da die Werkteil beispielsweise von einem vorgelagerten Bearbeitungsschritt auf einer Transportpalette zur Biegepresse zugeliefert werden, ist zumeist stets sicher gestellt, dass die Werkteile auf der Palette in ihrer Grundausrichtung korrekt angeordnet sind, geringfügige Abweichungen bei der Detailausrichtung können jedoch bestehen. Vor dem Einlegen des Werkteils in die Biegepresse muss die Abweichung von einer Soll-Position jedenfalls korrigiert werden, um ein korrektes Biegeergebnis zu erreichen.

Beispielsweise zeigt die EP 1 681 111 A1 eine Fertigungseinrichtung mit einer Groberkennungs- und einer Feinerkennungskamera, wobei von der Groberkennungskamera aus einem größeren Abstand die Grundausrichtung des Blechstapels ermittelt wird und daraufhin von der Feinerkennungskamera, die in einem geringeren Abstand wirkt, die tatsächliche Ausrichtung des Blechstapels bestimmt wird.

Ferner ist aus der DE 10 2005 033 344 B4 eine Vorrichtung und ein Verfahren zur Werkstückeinmessung bekannt. Dabei wird von einer Kamera ein Teilbereich des Werkstückes erfasst und mittels ersten Verarbeitungsmitteln geometrische Parameter des erfassten Teilbereichs ermittelt. Mittels zweiter Verarbeitungsmittel wird durch Vergleich mit einem hinterlegten Geometriemodell eine Lageinformation des Werkstückes ermittelt.

Zur Sicherstellung der korrekten Ausrichtung eines Werkteils ist ferner bekannt, das Werkteil an einer Anschlagvorrichtung anzulegen, um so die korrekte Ausrichtung sicher zu stellen. Dies hat aber den Nachteil, dass die Anschlagvorrichtung bei jedem Werkteiltypwechsel angepasst werden muss, was zumeist einen größeren Arbeitsaufwand bedeutet. Ein derartiges Anlegen hat den weiteren Nachteil, dass zumindest ein zusätzlicher Arbeitsschritt erforderlich ist, und ggf. eine Umorientierung der Manipulationsvorrichtung erforderlich macht.

Im Sinne eines möglichst hohen Durchsatzes bei einer automatisierten Fertigung wäre es nun von Vorteil, wenn beim Einlegen eines Werkteils von einer Bereitstellungsposition in die Werkzeugmaschine, eine allenfalls vorhandene Abweichung von einer geforderten Ausrichtung korrigiert werden kann.

Die Aufgabe der Erfindung liegt also darin ein Verfahren zu schaffen, mit dem geringfügige Abweichungen von einer Soll-Ausrichtung eines zugelieferten Stückguts, bei der Zuführung zu einer Werkzeugmaschine für die weitere Bearbeitung in einem Arbeitsschritt prozesssicher korrigiert werden können.

Die Aufgabe der Erfindung wird dadurch gelöst, dass von einer ersten und zweiten Position des Stückgutstapels jeweils ein Abbild erfasst wird, wobei von einem Bildanalyse- und Vergleichsmodul für jedes Abbild eine Bildanalyse durchgeführt wird und daraus eine Kontur extrahiert und eine Positionsinformation ermittelt wird. Aus der Positionsinformation, insbesondere einer ersten und zweiten Positionsinformation, wird ferner ein Abstand ermittelt. Daraus und aus den extrahierten Strukturen wird vom Bildanalyse- und Vergleichsmodul ein Teilmodell erstellt, welches anschließend mit einem hinterlegten Referenzmodell verglichen wird. Aus einer Abweichung zwischen dem Teilmodell und dem Referenzmodell wird dann eine Transformationsinformation ermittelt.

Durch die Erfassung eines Abbilds an einer ersten und zweiten Position des Stückgutstapels ist sichergestellt, dass die relative Ausrichtung des Stückgutstapels zuverlässig erfasst werden kann, da aus zwei erfassten Positionen eines Objekts eine Ausrichtungsorientierung festgelegt werden kann, was insbesondere bei flächenhaften Objekten besonders gut möglich ist. Da das zu erfassende Stückgut zumeist eine exakte Kante aufweist, kann diese Kante mittels einer Bildanalyse aus dem erfassten Abbild zuverlässig extrahiert werden. Somit ist eine kontaktlose Erfassung der äußeren Begrenzung des zu oberst angeordneten Stückguts möglich, was insbesondere den Vorteil hat, dass die Erfassung für weitestgehend beliebig ausgebildete Stückgüter durchgeführt werden kann, ohne dass die Erfassungsvorrichtung angepasst werden muss.

Die bei der Bildanalyse ermittelte Kontur- und Positionsinformation wird dahingehend zueinander in Verbindung gebracht, dass die erste erfasste Kontur an der ersten Position durch einen Abstand von der zweiten Kontur an der zweiten Position entfernt ist, wobei insbesondere der Abstand als zweidimensionale Koordinateninformation bzw. als Polardarstellung ermittelt wird. Das dadurch gebildete Teilemodell wird nun mit einem hinterlegten Referenzmodell verglichen, insbesondere werden die erste und zweite erfasste Kontur mit entsprechend korrespondierenden Konturen des Referenzmodells verglichen. Bei einer Abweichung der Ausrichtung der Konturen des Teilemodells und des Referenzmodells wird aus dieser Abweichung eine Transformationsinformation ermittelt. Somit kann sowohl ein Versatz des Stückguts parallel zur Ebene der Decklage und ferner eine Verdrehung des Stückguts in der Ebene der Decklage ermittelt werden.

Eine Weiterbildung nach der die Transformationsinformation als 2D-Verschiebungs- und/oder als Polardarstellung ermittelt wird, hat den Vorteil, dass unmittelbar aus der Kenntnis bzw. bei Berücksichtigung einer festen Referenzposition des Stückgutstapels, eindeutig die relative Lage des obersten Teils des Stückgutstapels ermittelt werden kann. Der Stückgutstapel wird beispielsweise auf einer Palette einer Zuführvorrichtung bereitgestellt. Da die ermittelte Transformationsinformation jene Abweichung beschreibt, die zwischen der durch das Referenzmodell bestimmten Soll-Ausrichtung und der durch die Erfassung der ersten und zweiten Kontur und Bildung des Teilemodells vorhandenen Ist-Ausrichtung besteht, kann diese Transformationsinformation bei Darstellung als 2D-Verschiebungsdarstellung, insbesondere als Verschiebungsvektoren dadurch beschrieben werden, dass die Abweichung der Position der ersten und zweiten Kontur, beispielsweise durch ein dx und dy innerhalb bzw. in Relation zur Ebene der Decklage angegeben wird. Bei einer Polardarstellung wird ausgehend von einem Fixpunkt, beispielsweise einem Mittelpunkt und/oder einer Position der erfassten Kontur, eine Verschiebung und Drehung angegeben.

Da das erfindungsgemäße Verfahren bevorzugt für eine Zuführvorrichtung einer Werkzeugmaschine verwendet wird, wird gemäß einer Weiterbildung die Transformationsinformation an eine Manipulationsvorrichtung übermittelt und von dieser auf den Stückgutstapel und/oder auf das oberste Teil des Stückgutstapels angewendet. Bevorzugt wird das einzelne Stückgut von der Manipulationsvorrichtung der nachgelagerten Werkzeugmaschine zugeführt, wobei von dieser Manipulationsvorrichtung die Transformationsinformation angewendet wird, also der Versatz in der Ebene und eine Verdrehung in dieser korrigiert wird, sodass das Stückgut korrekt ausgerichtet der Werkzeugmaschine zugeführt wird. Bei sehr großen und/oder sehr schweren Teilen kann ggf. eine Zuführung mittels einer Manipulationsvorrichtung nicht mehr möglich sein, sodass diese Teile beispielsweise mittels eines Linearfördersystems der Werkzeugmaschine zugeführt werden. Daher kann auch der Stückgutstapel selbst, also beispielsweise die Transportpalette bzw. Transportvorrichtung entsprechend der Transformationsinformation ausgerichtet werden, sodass das oberste Stückgut wiederum in korrekter Ausrichtung der Werkzeugmaschine zugeführt wird.

Von Vorteil ist ferner eine Weiterbildung, nach der bei der Bildanalyse eine Teilekennung ermittelt wird, da mittels dieser Teilekennung beispielsweise eine Qualitätssicherung realisiert werden kann, in dem jederzeit nachvollziehbar ist, wann welches Stückgut einen Bearbeitungsschritt durchlaufen hat. Im Hinblick auf eine flexible Automation hat diese Weiterbildung ferner den Vorteil, dass eine auf das Stückgut bezogene individuelle Behandlung möglich ist. Beispielsweise kann durch Auslesen der Teilekennung über ein Produktionsplanungssystem auf stückgutspezifische Produktionsdaten zugegriffen werden. Die hinterlegten Positionsdaten können mit der aktuellen Transformationsinformation zusammengeführt werden, um das Stückgut individuell entsprechend ausgerichtet einer nachgelagerten Werkzeugmaschine zuzuführen. Dies ist insbesondere bei geringen Stückzahlen von besonderem Vorteil, da dies automatisch geschehen kann, ohne dass dafür vom Bediener durchzuführende Rüstarbeiten nötig sind. Ferner kann eine aufgebrachte Teilekennung auch als eine zu erfassende Kontur dienen, beispielsweise wenn das Stückgut nur eine sehr gering spezifisch ausgeprägte äußere geometrische Struktur aufweist, um somit eine zuverlässige Erkennung der Ausrichtung des Stückguts zu ermöglichen.

Da sich an einer Kante des Stückguts die Helligkeitswerte sehr rasch um einen großen Betrag ändern werden, ist eine Weiterbildung von Vorteil, nach der die Bildanalyse als Grauwertvergleich mit einer Schwellwertanalyse durchgeführt wird. Somit kann beispielsweise durch Kontrastverstärkung der Übergang zwischen Stückgut und Umgebung sehr klar und deutlich hervorgehoben werden, was die Erfassung bzw. Ermittlung der Kontur erleichtert.

Im Hinblick auf eine möglichst universelle Einsetzbarkeit des erfindungsgemäßen Verfahrens, insbesondere im Hinblick darauf, dass kein sogenannter Einlernvorgang erforderlich ist um das Verfahren von einer Stückgutart auf eine weitere Stückgutart umzustellen, ist eine Weiterbildung von Vorteil, nach der das Referenzmodell von einem Konstruktions- bzw. Planungssystem übermittelt wird. Somit ist ein direkter Zugriff auf Konstruktionsdaten gewährleistet, insbesondere ist dadurch ein sehr rascher Wechsel zwischen zwei unterschiedlichen Stückgutarten möglich, ohne dass das erfindungsgemäße Verfahren auf die neu zu verarbeitende Stückgutart umgestellt werden muss. Es muss lediglich sicher gestellt sein, dass die Manipulationsvorrichtung die unterschiedlichen Stückgüter verarbeiten kann.

Bei der Erstellung der Konstruktionsdaten bzw. als Vorbereitung für das erfindungsgemäße Verfahren muss die erste und zweite Position an der jeweils ein Abbild erfasst wird, eingangs festgelegt werden. Beispielsweise kann dies vom Konstrukteur bei der Festlegung der Arbeitsschritte, welche von der nachgelagerten Werkzeugmaschine durchgeführt werden, geschehen. Von Vorteil ist jedoch eine Weiterbildung, nach der für das Referenzmodell die erste und zweite Position aufgrund einer Konturanalyse festgelegt wird, da somit dem Konstrukteur die Entscheidung der Festlegung einer möglichst markanten Struktur des Stückguts abgenommen wird. In einer Weiterbildung kann diese Ermittlung automatisch erfolgen, sodass die für eine zuverlässige Konturerkennung günstigste Position zuverlässig und insbesondere automatisch erkannt wird. Gerade bei Stückgütern mit wenig eindeutigen äußeren Konturen hat diese Weiterbildung den Vorteil, dass von einem automatischen Verfahren jene optimale Kontur ermittelt wird, die bei der nachfolgenden Bildanalyse zur Ermittlung der ersten und zweiten Kontur Anwendung findet. Insbesondere kann somit jene Kontur gewählt werden, die optimal an die Bildanalyse angepasst ist und somit stets eine hohe Ermittlungsgenauigkeit bietet.

Da das erfindungsgemäße Verfahren für möglichst eine Vielzahl unterschiedlicher Stückgüter verwendbar sein soll, die Bilderfassungsvorrichtung daher entsprechend flexibel ausgebildet sein muss, ist eine Weiterbildung von Vorteil, nach der die Bilderfassungsvorrichtung an die erste und zweite Position in Relation zum Stückgutstapel bewegt wird. Somit kann mit einer universell ausgebildeten Bilderfassungsvorrichtung eine Vielzahl unterschiedlich ausgebildeter Stückgüter erfasst werden, in dem die Bilderfassungsvorrichtung an die jeweils entsprechende Position bewegt wird. Beispielsweise kann dazu die Bilderfassungsvorrichtung an der Manipulationsvorrichtung angeordnet sein, oder es ist dafür eine zusätzliche Positioniervorrichtung vorgesehen.

Bei der Aufnahme des Stückguts zur Zuführung an die nachgelagerte Werkzeugmaschine kann es vorkommen, dass aufgrund von Hafteffekten mehr als ein Stückgut abgenommen wird. Wird nun gemäß einer Weiterbildung bei hintereinander folgenden Erfassungen der Abbilder auch ein Aufnahmeabstand erfasst und aus den aufeinanderfolgend ermittelten Aufnahmeabständen eine Differenz ermittelt, kann bei Vergleich dieser Differenz mit einem Referenzabstand festgestellt werden, ob mehr als ein Stückgut abgenommen wurde um daraufhin entsprechend reagieren zu können, bspw. die nachgelagerte Bearbeitung abzubrechen.

Eine Weiterbildung nach der bei der Bildanalyse eine weitere Kontur extrahiert wird, für die eine dritte Positionsinformation ermittelt wird, hat den Vorteil, dass dadurch ebenfalls wiederum geprüft werden kann, ob mehr als ein Stückgut abgenommen wurde. Da bei übereinander angeordneten Stückgütern auf einem Stückgutstapel die Kontur des unter dem obersten Stückgut angeordneten Stückguts hervorscheinen wird, kann für diese Kontur eine dritte Positionsinformation ermittelt werden und nach Abnehmen des obersten Stückguts geprüft werden, ob diese dritte Kontur wieder erfasst werden kann. Falls dies nicht möglich ist, wurde statt einem Stückgut zumindest auch das zweite Stückgut abgenommen, worauf wiederum entsprechend reagiert werden kann.

Die Aufgabe der Erfindung wird auch durch eine Zuführvorrichtung für eine Biegepresse gelöst, wobei die Zuführvorrichtung eine Stapelaufnahmevorrichtung, eine Bilderfassungsvorrichtung, ein Bildanalyse- und Vergleichsmodul und eine Teilemanipulationsvorrichtung aufweist. Insbesondere wird die Aufgabe der Erfindung dadurch gelöst, dass die Teilemanipulationsvorrichtung ein selektiv steuerbares Antriebsmittel aufweist, da somit die vom erfindungsgemäßen Verfahren ermittelte Transformationsinformation direkt an das selektiv steuerbare Antriebsmittel übermittelt werden kann, woraufhin dieses die Teilemanipulationsvorrichtung derart steuert, dass bei der Aufnahme des zu oberst angeordneten Stückguts vom Stückgutstapel und der Zuführung zur Werkzeugmaschine, insbesondere der Biegepresse, eine ggf. vorhandene abweichende Ausrichtung korrigiert werden kann.

Für einen möglichst hohen Durchsatz und eine möglichst universelle Anwendbarkeit des erfindungsgemäßen Verfahrens in der erfindungsgemäßen Zuführvorrichtung ist eine Weiterbildung von Vorteil, nach der die Bilderfassungsvorrichtung eine Mehrzahl von Bilderfassungsmittel aufweist. Da das Abbild an einer ersten und zweiten Position erfasst wird, zwischen denen ggf. ein großer Abstand besteht, muss eine einzelne Bilderfassungsvorrichtung ggf. einen großen Weg zurücklegen, was immer auch mit einer gewissen Zeitverzögerung einhergeht bzw. Probleme bei der Positioniergenauigkeit mit sich bringen kann. Bei einer Mehrzahl von Bilderfassungsmittel kann das erste und zweite Abbild unmittelbar und ohne Manipulation bzw. Positionierung der Bilderfassungsvorrichtung erfasst werden. In einer Weiterbildung kann die Bilderfassungsvorrichtung auch eine verschwenkbare Optik aufweisen, um so die Anzahl der erforderlichen Bilderfassungsvorrichtungen zu reduzieren und dennoch einen großen Erfassungsbereich abdecken zu können.

Für einen möglichst kompakten Aufbau der erfindungsgemäßen Zuführvorrichtung ist eine Weiterbildung von Vorteil, nach der die Bilderfassungsvorrichtung ein Bilderfassungsmittel und eine Schwenkvorrichtung aufweist, da somit mittels eines einzigen Bilderfassungsmittels im Hinblick auf ihre Größe im Wesentlichen beliebig ausgebildete Stückgüter erfasst werden können. Die Schwenkvorrichtung wird daher eine Positionssteuerung aufweisen, um gezielt das Bilderfassungsmittel an eine vorgegebene, insbesondere die erste und zweite Position, zu bewegen.

Bei schwierigen Kontrastverhältnissen, beispielsweise bei stark reflektierenden Oberflächen des zu oberst angeordneten Stückguts, ist eine Weiterbildung von Vorteil, nach der die Bilderfassungsvorrichtung eine Beleuchtungsvorrichtung aufweist. Beispielsweise kann die Beleuchtungsvorrichtung einen konzentrierten Lichtstrahl abgeben um so die Kontrastverhältnisse zur Ermittlung der Kontur zu verbessern. Auch ist eine Beleuchtung im nicht-sichtbaren Bereich, beispielsweise im IR- oder UV-Bereich möglich, um somit die Erkennung der äußeren Kontur und damit die Ermittlung der ersten und zweiten Kontur bzw. ersten und zweiten Positionsinformation zu verbessern.

Beispielsweise kann die Teilemanipulationsvorrichtung als ein Greifroboter ausgebildet sein, dessen Greifkopf beispielsweise einen Vakuumsauger aufweist. Zusätzlich kann jedoch am Greifkopf auch die Bilderfassungsvorrichtung angeordnet sein, sodass der Greifroboter im ersten Schritt die Bilderfassungsvorrichtung an die erste und zweite Position bewegt, wobei dort jeweils ein Abbild erstellt wird. Vom erfindungsgemäßen Verfahren wird anschließend die Transformationsinformation ermittelt und an die Teilemanipulationsvorrichtung übermittelt. Der Greifroboter kann nun das zu oberst liegende Stückgut am vorgesehenen Aufnahmepunkt aufnehmen und bei der Bewegung vom Stückgutstapel zur Werkzeugmaschine die Transformationsinformation anwenden oder die Transformationsinformation bereits bei der Bewegung auf den Aufnahmepunkt anwenden.

Von Vorteil ist ferner eine Weiterbildung, nach der die Bilderfassungsvorrichtung eine Distanzmessvorrichtung aufweist, da somit der Aufnahmeabstand zwischen Bilderfassungsvorrichtung und oberstem Stückgut des Stückgutstapels erfasst werden kann. Wird dies in jedem Arbeitsschritt durchgeführt, kann durch Ermittlung der Differenz der Abstände zwei hintereinander folgender Manipulationsvorgänge ermittelt werden, ob ein oder mehrere Stückgüter vom Stapel genommen wurden und ggf. eine Fehlerbehandlung initiiert werden.

Eine Weiterbildung nach der die Strahlengänge bei der Erfassung des ersten und zweiten Abbildes einen spitzen Winkel zur Normalen auf die Decklage aufweisen hat den Vorteil, dass dadurch einfach eine Kontrasterhöhung und damit eine Erhöhung der Erfassungssicherheit der ersten und zweiten Kontur möglich ist, da sich eine Kante des Stückguts gegenüber einer beispielsweise dunkleren Umgebung deutlich hervortreten wird.

Zum besseren Verständnis der Erfindung wird diese anhand der nachfolgenden Figuren näher erläutert.

Es zeigen jeweils in stark schematisch vereinfachter Darstellung:
- Fig. 1: Eine Fertigungsanordnung bei der das erfindungsgemäße Verfahren Anwendung findet;
- Fig. 2: Eine schematische Darstellung der Abstraktions- und Modellbildungsschritte des erfindungsgemäßen Verfahrens;
- Fig. 3: Eine weitere mögliche Ausbildung des erfindungsgemäßen Verfahrens.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

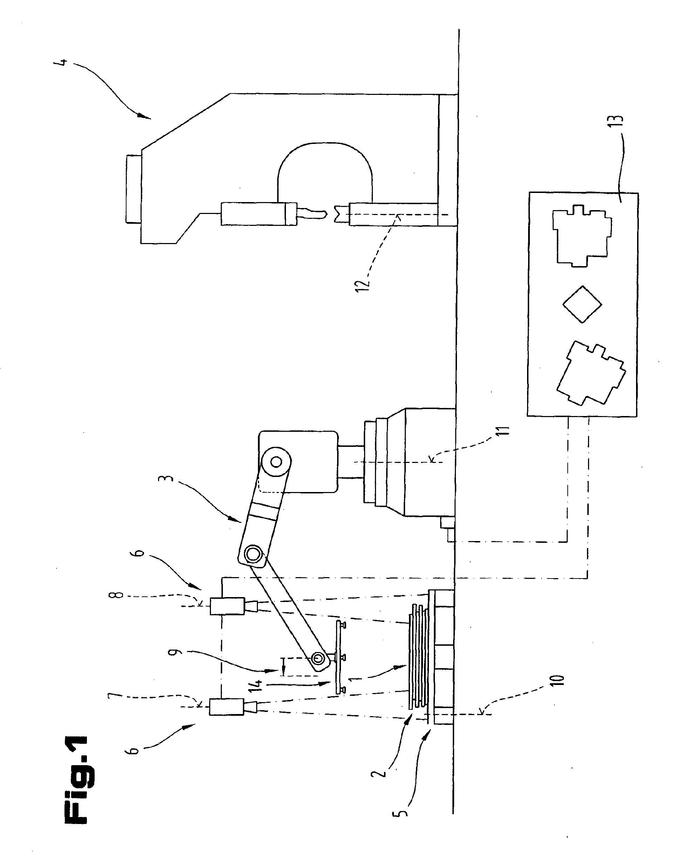

Fig. 1 zeigt eine Anordnung zur Durchführung des erfindungsgemäßen Verfahrens. Dabei wird Stückgut 1, welches auf einem Stückgutstapel 2 angeordnet ist, von einer Manipulationsvorrichtung 3 korrekt ausgerichtet einer Werkzeugmaschine 4 zugeführt.

Im Zuge einer Bearbeitungskette zur Herstellung eines Fertigteils können mehrere Bearbeitungsschritte erforderlich sein, insbesondere wird ein Stückgut an mehreren Bearbeitungsplätzen beispielsweise einer mechanischen Bearbeitung unterzogen. Zwischen den einzelnen Bearbeitungsplätzen wird das Stückgut 1 auf einer Lager- und Transportvorrichtung 5, beispielsweise einer Palette zwischengelagert und/oder mittels eines Fördersystems zwischen den Bearbeitungsplätzen bewegt. Durch die Zwischenlagerung bzw. den Transport des Stückgutstapels 2 auf der Lager- und Transportvorrichtung 5 kann es vorkommen, dass die einzelnen Stückgüter 1 am Stapel 2 geringfügig gegeneinander versetzt bzw. verdreht sind, die grundsätzliche Orientierung des Stückguts wird jedoch gegeben sein. Für die weitere Bearbeitung in der Werkzeugmaschine 4 ist es jedoch erforderlich, dass das Stückgut 1 korrekt ausgerichtet in die Werkzeugmaschine 4, beispielsweise eine Biegepresse, eingelegt wird, da es sonst zu einer fehlerhaften weiteren Bearbeitung kommen wird. Dazu war bisher beispielsweise bekannt, das Stückgut von der Manipulationsvorrichtung 3 aufzunehmen und an einer nicht dargestellten Anschlagvorrichtung abzulegen, um so die korrekte Ausrichtung herstellen zu können. Dies bedeutete jedoch einen zusätzlichen Arbeitsschritt, ferner musste die Anschlagvorrichtung auf jeden Stückguttyp entsprechend eingestellt bzw. konfiguriert werden. Im Sinne einer weitestgehend automatisierten Fertigung ist dies von Nachteil, da somit Zwischenschritte erforderlich sind, die einerseits den Durchsatz reduzieren und andererseits einen Eingriff bzw. eine Manipulationshandlung durch einen Bediener erforderlich machen. Auch wirken sich derartige zusätzliche Manipulationshandlungen sehr negativ auf den Durchsatz bei geringen Stückzahlen aus.

Das erfindungsgemäße Verfahren hat nun den besonderen Vorteil, dass mittels einer Bilderfassungsvorrichtung 6 an einer ersten 7 und zweiten 8 Position ein Abbild des zu oberst angeordneten Stückguts 1 des Stückgutstapels 2 erfasst wird und bei einer Abweichung der tatsächlichen Orientierung des obersten Stückguts von einer Referenzorientierung, eine Transformationsinformation 9 ermittelt wird. Durch Anwenden der Transformationsinformation 9 beim Bewegen des Stückguts 1 vom Stapel 2 in die Werkzeugmaschine 4 bzw. durch Ausrichten der Lager- und Transportvorrichtung 5, wird das Stückgut 1 korrekt in die Werkzeugmaschine eingelegt und sodann entsprechend weiter bearbeitet.

Durch Kenntnis eines Referenzpunktes 10 der Lager- und Transportvorrichtung 5, eines Referenzpunktes 11 der Manipulationsvorrichtung 3 sowie eines Referenzpunktes 12 der Werkzeugmaschine kann vom Bildanalyse- und Vergleichsmodul 13 eine eindeutige Beziehung zwischen den Referenzpunkten 10, 11, 12 und der ersten 7 und zweiten 8 Position der erfassten Abbilder hergestellt werden. Insbesondere wird vom Bildanalyse- und Vergleichsmodul 13 im erfassten Abbild eine Kontur ermittelt, wobei wiederum unter Kenntnis der drei Referenzpunkte 10, 11, 12 und der ersten 7 und zweiten 8 Position die Position der ermittelten Kontur exakt ermittelt werden kann. Der Referenzpunkt 10 der Lager- und Transportvorrichtung 5, der Referenzpunkt 11 der Manipulationsvorrichtung 3 und der Referenzpunkt 12 der Werkzeugmaschine sind bevorzugt als zweidimensionale Koordinaten ausgebildet, es ist jedoch auch möglich, diese Positionen als 3-D Position darzustellen, wodurch sich auch relative Höhenunterschiede ermitteln lassen. Auch kann der Referenzpunkt 12 der Werkzeugmaschine 4 durch eine Referenzlinie gegeben sein, bspw. durch die Biegelinie einer Biegepresse.

Eine Greifvorrichtung 14 der Manipulationsvorrichtung 3 kann beispielsweise als Vakuumgreifer ausgebildet sein, um so bevorzugt flächenhafte Stückgüter 1 aufnehmen zu können.

Die Greifvorrichtung 14 ist jedoch nicht auf diese Ausbildung beschränkt, sondern es können all jene Greifvorrichtungen verwendet werden, die zur Aufnahme von Stückgut und zur Weiterbeförderung zu einer Werkzeugmaschine geeignet sind.

Bei großen, unhandlichen bzw. schweren Teilen ist ferner vorgesehen, dass die Korrektur der Ausrichtung des Stückguts bei der Zuführung zur Werkzeugmaschine nicht durch die Manipulationsvorrichtung 3 erfolgt, sondern dass die Lager- und Transportvorrichtung 5 den gesamten Stückgutstapel 2 entsprechend der ermittelten Transformationsinformation 9 ausrichtet. Beispielsweise kann die Lager- und Transportvorrichtung 5 als Aufnahmevorrichtung für Einzelstückgut ausgebildet sein, um so großvolumiges oder schweres Stückgut zwischen den einzelnen Bearbeitungsmaschinen zu befördern.

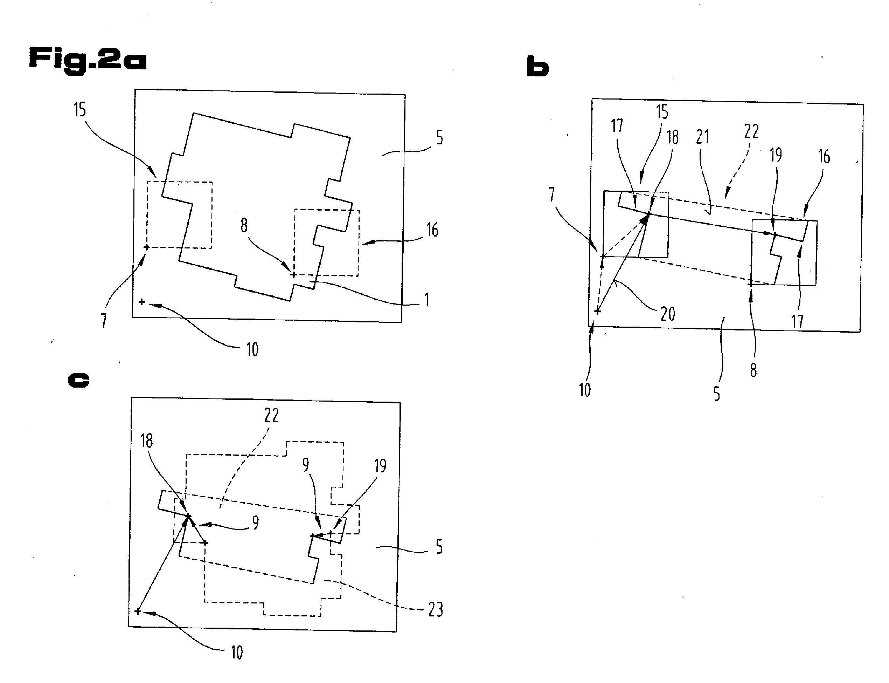

In den Figuren 2a-2c ist vereinfacht und zusammengefasst dargestellt, wie aus der Erfassung eines Abbildes und der Ermittlung einer Kontur, die Transformationsinformation ermittelt wird.

Fig. 2a zeigt eine Darstellung des obersten Stückguts 1 des Stückgutstapels, wobei zur Vereinfachung der Darstellung nur das oberste Stückgut abgebildet ist. Die übereinander angeordneten Stückgüter sind in ihrer Hauptausrichtung grundsätzlich korrekt angeordnet, jedoch können die einzelnen Stückgüter gegeneinander und gegenüber einer bevorzugten Referenzausrichtung verdreht bzw. versetzt angeordnet sein. Erfindungsgemäß wird nun an einer ersten Position 7 ein erstes Abbild 15 und an einer zweiten Position 8 ein zweites Abbild 16 erfasst. Die Position der zu erfassenden Abbilder wird dabei derart gewählt, dass möglichst charakteristische Merkmale des Stückguts im Bereich des Abbilds liegen, um so eine zuverlässige Ermittlung der Kontur und daraus der Transformationsinformation zu gewährleisten. Bevorzugt werden die Positionen der zu ermittelnden Abbilder bei der Konstruktion des Stückguts festgelegt, wobei insbesondere die Positionen derart gewählt werden, dass zwischen den beiden Abbildern ein möglichst großer Abstand besteht, um einen Versatz bzw. eine Verdrehung mit ausreichender Genauigkeit feststellen zu können.

Durch Kenntnis des Referenzpunktes 10 der Lager- und Transportvorrichtung 5 ist über die erste 7 und zweite 8 Position des Abbilds ferner die Position jedes Punktes des Abbilds bzw. der ermittelten Kontur in Relation zur Lager- und Transportvorrichtung 5 eindeutig bestimmbar.

Fig. 2b zeigt einen weiteren Verfahrensschritt, bei dem aus den beiden erfassten Abbildern jeweils eine Kontur 17 ermittelt wurde, wobei für die erste Kontur eine erste Positionsinformation 18 und für die zweite Kontur eine zweite Positionsinformation 19 ermittelt wurde. Beispielhaft dargestellt kann die erste Positionsinformation 18 dadurch ermittelt werden, dass vom Referenzpunkt 10 der Lager- und Transportvorrichtung 5 ausgehend über die erste Position 7 des ersten Abbilds 15 auf die erste Positionsinformation 18 rückgeschlossen werden kann, dies ist in Fig. 2b durch die gestrichelten Pfeile dargestellt. Vom Referenzpunkt 10 der Lager- und Transportvorrichtung 5 kann somit ein Abstand 20 zur ersten Positionsinformation 18 angegeben werden, wobei der Abstand beispielsweise als Vektor angegeben werden kann. Auf gleich Weise kann auch die zweite Positionsinformation 19 des zweiten Abbilds 16 ermittelt werden. Erfindungsgemäß wird nun zwischen der ersten Positionsinformation 18 und der zweiten Positionsinformation 19 ein Abstand 21 ermittelt. Erfindungsgemäß wird vom Bildanalyse- und Vergleichsmodul aus den extrahierten Konturen 17 und dem Abstand 21 zwischen den Konturen, ein Teilemodell 22 erstellt, welches im nachfolgenden Schritt mit einem hinterlegten Referenzmodell verglichen wird.

In Fig. 2c ist dargestellt, wie das generierte Teilemodell 22 dem Referenzmodell 23 überlagert bzw. mit diesem verglichen wird, um so eine evtl. vorhandene Abweichung zwischen den beiden Modellen ermitteln zu können. Dazu wird die erste 18 und zweite 19 Positionsinformation des Teilemodells 22 mit den jeweils korrespondierenden Positionen des Referenzmodells 23 verglichen, um daraus die Transformationsinformation 9 ermitteln zu können. Diese Transformationsinformation legt nun eindeutig fest, wie weit das Teilemodell 22 vom Referenzmodell 23 verschoben ist bzw. um welches Maß das Teilemodell gegen das Referenzmodell verdreht ist, wobei selbstverständlich Kombinationen der beiden Ausrichtungsungenauigkeiten möglich sind.

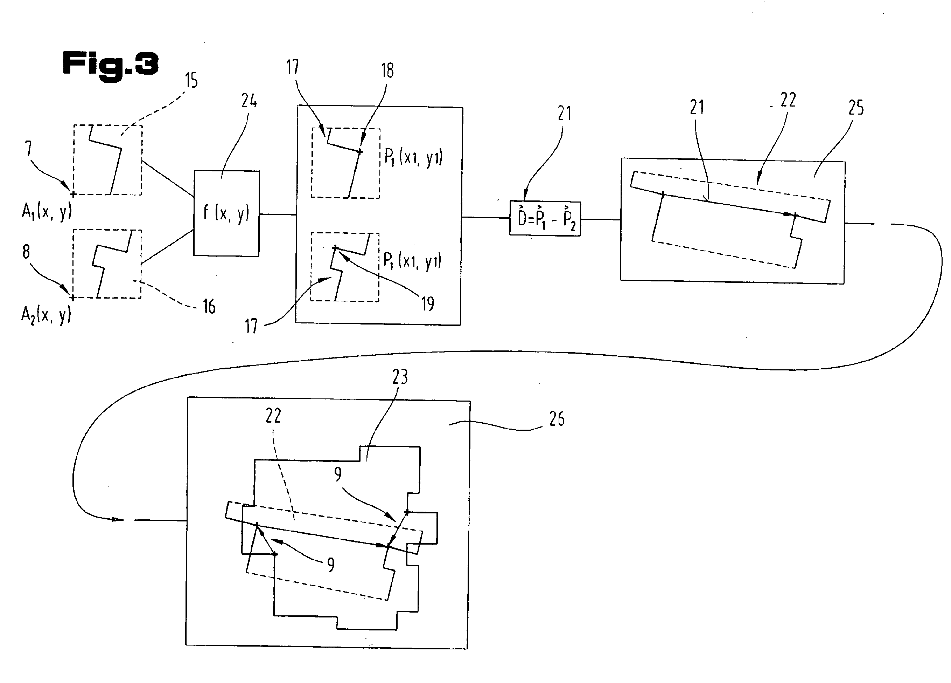

Fig. 3 zeigt eine schematische Darstellung des erfindungsgemäßen Verfahrens, insbesondere der Verfahrensschritte des Bildanalyse- und Vergleichsmoduls. Aus dem erfassten ersten 15 und zweiten 16 Abbild eines oberen Teils eines Stückgutstapels wird mittels eines Kantenextraktionsmoduls 24 jeweils eine Kontur 17 ermittelt. Diese Extraktion kann beispielsweise durch Kontrastverstärkung eines Grauwertbildes erfolgen. Jedes der beiden Abbilder 15, 16 ist über die Position 7, 8 eindeutig in seiner räumlichen Ausrichtung bzgl. der Lager- und Transportvorrichtung festgelegt. Somit ist auch die erste 18 und zweite 19 Positionsinformation der aus den Abbildern extrahierten Kontur 17 eindeutig festgelegt, sodass sich eindeutig ein Abstand 21 zwischen der ersten und zweiten Positionsinformation angeben lässt. Durch Darstellung der Punkte als Vektorkoordinaten kann mittels einfacher Vektorarithmetik vom Referenzpunkt 10 der Lager- und Transportvorrichtung 5, der Abstand D 21 ermittelt werden.

Von einem Modellbildungsmodul 25 werden die ermittelten Konturen 17 zusammen mit dem ermittelten Abstand 21 zu einem Modell 22 zusammengestellt, welches anschließend mit dem Referenzmodell verglichen wird. Das Strukturvergleichsmodul 26 versucht nun, das Teilemodell 22 mit dem Referenzmodell 23 zur Deckung zu bringen. Insbesondere werden da jene Verschiebungsvektoren, die Transformationsinformation 9, ermittelt, die erforderlich sind, um die beiden Modelle zur Deckung zu bringen. Zum Abgleich der beiden Modelle sind wiederum aus der optischen Bildverarbeitung, insbesondere aus dem Fachgebiet der Mustererkennung, mehrere Verfahren bekannt, sodass hier nicht weiter darauf eingegangen wird.

Nachdem die Transformationsinformation 9 ermittelt wurde, kann diese an die Manipulationsvorrichtung übergeben werden, woraufhin die Manipulationsvorrichtung das oberste Stückgut greift, die Transformation anwendet und entsprechend orientiert und ausgerichtet der Werkzeugmaschine zuführt. Wie bereits beschrieben kann die Transformationsinformation auch von der Lager- und Transportvorrichtung angewendet werden, um so das Stückgut bzw. den gesamten Stückgutstapel in Relation zur nachgelagerten Werkzeugmaschine korrekt auszurichten und zu positionieren.

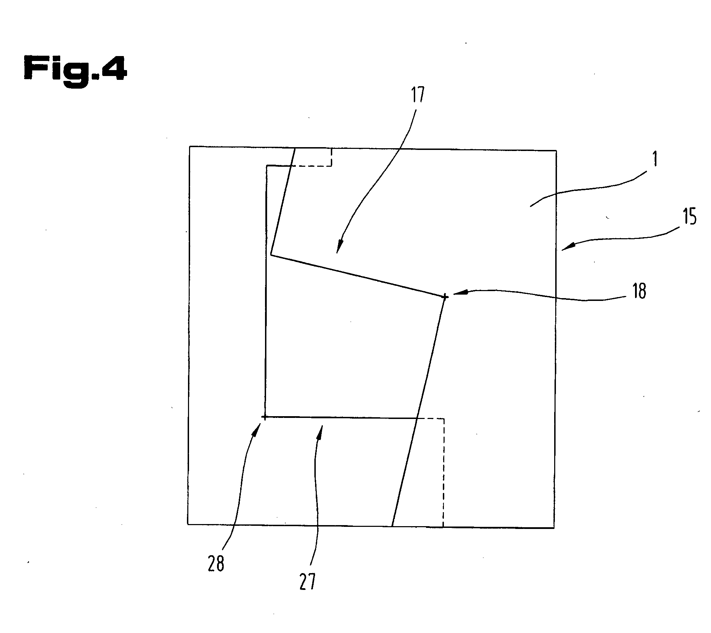

Fig. 4 zeigt eine mögliche Weiterbildung des erfindungsgemäßen Verfahrens, bei dem neben der Kontur 17 des zu oberst liegenden Stückguts 1 auch noch eine Kontur 28 des darunter angeordneten Stückguts ermittelt wird. Bei der Aufnahme von Stückgut von einem Stückgutstapel besteht die Gefahr, dass durch Anhaftung beispielsweise nicht nur das zu oberst angeordnete Stückgut gegriffen wird, sondern dass auch das darunter angeordnete Stückgut abgehoben wird. Beispielsweise kann nun bei der Ermittlung der Kontur im ersten und/oder zweiten Abbild vom darunter angeordneten Stückgut eine weitere Kontur ermittelt werden. Wird beispielsweise für das erste Abbild 15 die Kontur und insbesondere die erste Positionsinformation 18 ermittelt, kann beispielsweise für die weitere Kontur 27 ein markanter Referenzpunkt 28 ermittelt werden. Nach Abheben des obersten Stückguts wird das erfindungsgemäße Verfahren erneut für das nun zu oberst liegende Stückgut durchgeführt, insbesondere werden wiederum ein erstes und zweites Abbild ermittelt. Zur Prüfung, ob nun genau ein Stückgut im vorangegangenen Manipulationsschritt abgehoben wurde, kann vom Bildanalyse- und Vergleichsmodul geprüft werden, ob der zuvor ermittelte Referenzpunkt 28 noch an der zuvor ermittelten Position bzw. in einem nahen Umkreis davon ermittelt werden kann. Ist dies nicht möglich kann darauf geschlossen werden, dass mehr als ein Stückgut abgehoben wurde, worauf entsprechend rasch reagiert werden kann, beispielsweise indem die Werkzeugmaschine angehalten wird und so die weitere Verarbeitung gestoppt wird.

Der wesentliche Vorteil des erfindungsgemäßen Verfahrens liegt nun darin, dass mittels der Erfassung zweier Abbilder von charakteristischen Bereichen des Stückguts, eindeutig und prozesssicher ermittelt werden kann, ob und in welchem Ausmaß das auf einer Lager- und Transportvorrichtung angeordnete Stückgut von einer Referenzausrichtung abweicht. Durch Ermittlung der Transformationsinformation kann eine nachgelagerte Manipulationsvorrichtung und/oder die Lager- und Transportvorrichtung gezielt angesteuert werden, um vor der Anordnung des Stückguts in der nachgelagerten Werkzeugmaschine, dieses entsprechend auszurichten, ohne dass dafür ein Zwischenschritt, insbesondere ein Anlegeschritt, erforderlich wäre. Da das ermittelte Teilemodell mit dem Referenzmodell verglichen wird, wobei dieses Referenzmodell bevorzugt direkt aus einem Konstruktionssystem generiert wird, ist das erfindungsgemäße Verfahren jederzeit und insbesondere ohne Einlernvorgänge auf einen neuen Stückguttyp adaptierbar. Insbesondere ist durch Hinterlegung eines neuen Referenzmodells eine sofortige Anwendung des erfindungsgemäßen Verfahrens möglich, was insbesondere eine Bearbeitung bis hin zur Losgröße 1 ermöglicht.

Die Ausführungsbeispiele zeigen mögliche Ausführungsvarianten des Verfahrens zur Bestimmung der Ausrichtung eines oberen Teils eines Stückgutstapels, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

In der Fig. 4 ist eine weitere und gegebenenfalls für sich eigenständige Ausführungsform des Verfahrens zur Bestimmung der Ausrichtung eines oberen Teils eines Stückgutstapels gezeigt, wobei wiederum für gleiche Teile gleiche Bezugszeichen bzw. Bauteilbezeichnungen wie in den vorangegangenen Figuren verwendet werden. Um unnötige Wiederholungen zu vermeiden, wird auf die detaillierte Beschreibung in den vorangegangenen Fig. 1 bis 3 hingewiesen bzw. Bezug genommen.

Der Ordnung halber sei abschließend darauf hingewiesen, dass zum besseren Verständnis des Aufbaus des Verfahrens zur Bestimmung der Ausrichtung eines oberen Teils eines Stückgutstapels diese bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

### Bezugszeichenaufstellung

- 1: Stückgut
- 2: Stückgutstapel
- 3: Manipulationsvorrichtung
- 4: Werkzeugmaschine
- 5: Lager- und Transportvorrichtung

- 6: Bilderfassungsvorrichtung
- 7: Erste Position
- 8: Zweite Position
- 9: Transformationsinformation
- 10: Referenzpunkt

- 11: Referenzpunkt
- 12: Referenzpunkt
- 13: Bildanalyse- und Vergleichsmodul
- 14: Greifvorrichtung
- 15: Erstes Abbild

- 16: Zweites Abbild
- 17: Kontur
- 18: Erste Positionsinformation
- 19: Zweite Positionsinformation
- 20: Abstand

- 21: Abstand
- 22: Teilemodell
- 23: Referenzmodell
- 24: Kantenextraktionsmodul
- 25: Modellbildungsmodul

- 26: Strukturvergleichsmodul
- 27: Kontur
- 28: Referenzpunkt

## Patentansprüche

1. Verfahren zur Bestimmung der Ausrichtung eines oberen Teils (1) eines Stückgutstapels (2), insbesondere eines Blechstapels, wobei von einer Bilderfassungsvorrichtung (6) ein Abbild der oberen Decklage des Stückgutstapels (2) erfasstwird und von einem Bildauswertemodul aus dem erfassten Abbild eine relative Ausrichtung der oberen Decklage ermittelt wird, **dadurch gekennzeichnet, dass** von einer ersten (7) Position des Stückgutstapels (2) ein erstes Abbild (15) und von einer zweiten Position (8) des Stückgutstapels(2) ein zweites Abbild (16) erfasstwird, wobei von einem Bildanalyse- und Vergleichsmodul (13) für jedes Abbild (15, 16) eine Bildanalyse durchgeführt wird, wobei bei der Bildanalyse eine Kontur (17) extrahiert und im ersten Abbild (15) eine erste (18) und im zweiten Abbild (16) eine zweite (19) Positionsinformation ermittelt wird, und wobei aus der ersten (18) und zweiten (19) Positionsinformation ein Abstand (21) ermittelt wird, wobei vom Bildanalyse- und Vergleichsmodul (13) aus den extrahierten Konturen (17) und dem Abstand (21) ein Teilemodell (22) erstellt wird, welches mit einem hinterlegten Referenzmodell (23) verglichen wird und wobei aus einer Abweichung zwischen dem Teilemodell (22) und dem Referenzmodell (23) eine Transformationsinformation (9) ermittelt wird.

2. Verfahren nach Anspruch 1, **dadurch gekennzeichnet, dass** die Transformationsinformation (9) als 2D-Verschiebungs- und/oder als Polardarstellung ermittelt wird.

3. Verfahren nach einem der Ansprüche 1 oder 2, **dadurch gekennzeichnet, dass** die Transformationsinformation (9) an eine Manipulationsvorrichtung (3) übermittelt wird und von dieser auf den Stückgutstapel (2) und/oder auf das oberste Teil (1) des Stückgutstapels (2) angewendet wird.

4. Verfahren nach einem der Ansprüche 1 bis 3, **dadurch gekennzeichnet, dass** bei der Bildanalyse eine Teilekennung ermittelt wird.

5. Verfahren nach einem der Ansprüche 1 bis 4, **dadurch gekennzeichnet, dass** die Bildanalyse als Grauwertvergleich mit einer Schwellwertanalyse durchgeführt wird.

6. Verfahren nach einem der Ansprüche 1 bis 5, **dadurch gekennzeichnet, dass** das Referenzmodell (23) von einem Konstruktions- bzw. Planungssystem übermittelt wird.

7. Verfahren nach einem der Ansprüche 1 bis 6, **dadurch gekennzeichnet, dass** für das Referenzmodell (23) die erste (7) und zweite Position (8) aufgrund einer Konturanalyse festgelegt wird.

8. Verfahren nach einem der Ansprüche 1 bis 7, **dadurch gekennzeichnet, dass** die Bilderfassungsvorrichtung (6) an die erste (7) und zweite (8) Position in Relation zum Stückgutstapel (2) bzw. zu einer Lager- und Transportvorrichtung (5) bewegt wird.

9. Verfahren nach einem der Ansprüche 1 bis 8, **dadurch gekennzeichnet, dass** bei hintereinander folgenden Erfassungen der Abbilder ein Aufnahmeabstand erfasst und aus den aufeinander folgend ermittelten Aufnahmeabständen eine Differenz ermittelt wird und mit einem Referenzabstand verglichen wird.

10. Verfahren nach einem der Ansprüche 1 bis 9, **dadurch gekennzeichnet, dass** bei der Bildanalyse eine weitere Kontur (27) extrahiert wird, für die eine dritte (28) Positionsinformation ermittelt wird.

11. Zuführvorrichtung für eine Werkzeugmaschine (4), insbesondere Biegepresse, umfassend eine Stapelaufnahmevorrichtung (5), eine Bilderfassungsvorrichtung (6), ein Bildanalyse- und Vergleichsmodul (13) und eine Teilemanipulationsvorrichtung (3), **dadurch gekennzeichnet, dass** die Zuführvorrichtung zur Durchführung eines Verfahren nach einem der Ansprüche 1 bis 10 ausgebildet ist und die Teilemanipulationsvorrichtung (3) ein selektiv steuerbares Antriebsmittel aufweist.

12. Zuführvorrichtung nach Anspruch 11, **dadurch gekennzeichnet, dass** die Bilder-fassungsvorrichtung (6) eine Mehrzahl von Bilderfassungsmittel aufweist.

13. Zuführvorrichtung nach einem der Ansprüche 11 oder 12, **dadurch gekennzeichnet, dass** die Bilderfassungsvorrichtung (6) ein Bilderfassungsmittel und eine Schwenkvorrichtung aufweist.

14. Zuführvorrichtung nach einem der Ansprüche 11 bis 13, **dadurch gekennzeichnet, dass** die Bilderfassungsvorrichtung (6) eine Beleuchtungsvorrichtung aufweist.

15. Zuführvorrichtung nach einem der Ansprüche 11 bis 14, **dadurch gekennzeichnet, dass** die Bilderfassungsvorrichtung (6) an der Teilemanipulationsvorrichtung (3) angeordnet ist.

16. Zuführvorrichtung nach einem der Ansprüche 11 bis 15, **dadurch gekennzeichnet, dass** die Bilderfassungsvorrichtung (6) eine Distanzmessvorrichtung aufweist.

17. Zuführvorrichtung nach einem der Ansprüche 11 bis 16, **dadurch gekennzeichnet, dass** die Strahlengänge bei der Erfassung des ersten und zweiten Abbilds einen spitzen Winkel zur Normalen auf die Decklage aufweisen.

## Claims

1. Method for determining the orientation of an upper part (1) of a stack (2) of piece goods, in particular a stack of metal sheets, whereby an image of the upper cover layer of the stack (2) of piece goods is acquired by an image acquisition device (6), and a relative orientation of the upper cover layer is determined from the image acquired by an image evaluation module, **characterized in that** a first image (15) is acquired from a first (7) position of the stack (2) of piece goods, and a second image (16) is acquired from a second (8) position of the stack (2) of piece goods, and an image analysis is performed for each image (15, 16) by an image analysis and comparison module (13), and a contour (17) is extracted during the image analysis, and a first (18) position information is determined in the first image (15) and second (19) position information is determined in the second image (16), and a distance (21) is determined from the first (18) and second (19) position information, and a part model (22) is created from the extracted contours (17) and the distance (21) by the image analysis and comparison module (13), which part model is compared with a stored reference model (23), and if there is a deviation between the part model (22) and the reference model (23), a transformation information (9) is determined.

2. Method according to claim 1, **characterized in that** the transformation information (9) is determined as 2D displacement coordinates and/or polar coordinates.

3. Method according to one of claims 1 or 2, **characterized in that** the transformation information (9) is transmitted to a manipulation device (3), by means of which it is applied to the stack (2) of piece goods and/or to the upper part (1) of the stack (2) of piece goods.

4. Method according to one of the claims 1 to 3, **characterized in that** an item reference is being determined during the image analysis.

5. Method according to one of claims 1 to 4, **characterized in that** the image analysis is performed as a comparison of gray scale values by way of a threshold analysis.

6. Method according to one of claims 1 to 5, **characterized in that** the reference model (23) is transmitted by a constructional system or a planning system.

7. Method according to one of claims 1 to 6, **characterized in that** the first (7) and second position (8) for the reference model (23) is defined on the basis of a contour analysis.

8. Method according to one of claims 1 to 7, **characterized in that** the image acquisition device (6) is moved to the first (7) and second position (8) relative to the stack (2) of piece goods or to a storage and transport device (5).

9. Method according to one of claims 1 to 8, **characterized in that** a shooting distance is acquired when the images are acquired consecutively, and a difference is determined from the consecutively determined shooting distances, and compared to a reference distance.

10. Method according to one of claims 1 to 9, **characterized in that** a further contour (27) is extracted during the image analysis, for which contour a third (28) position information is determined.

11. Feeding device for a machine tool (4), in particular bending press, comprising a stack holding device (5), an image acquiring device (6), an image analysis and comparison module (13) and a parts handling device (3), **characterized in that** the feeding device is embodied for performing a method according to one of claims 1 to 10, and the parts handling device (3) has a selectively controllable drive means.

12. Feeding device according to claim 11, **characterized in that** the image acquisition device (6) has a plurality of image acquisition means.

13. Feeding device according to one of claims 11 or 12, **characterized in that** the image acquisition device (6) exhibits an image acquisition means and a swivel device.

14. Feeding device according to one of claims 11 to 13, **characterized in that** the image acquisition device (6) exhibits an illuminating device.

15. Feeding device according to one of claims 11 to 14, **characterized in that** the image acquisition device (6) is arranged at the parts handling device (3).

16. Feeding device according to one of claims 11 to 15, **characterized in that** the image acquisition device (6) exhibits a distance measuring device.

17. Feeding device according to one of claims 11 to 16, **characterized in that** the beam paths have an acute angle with respect to the perpendicular of the cover layer when the first and the second image are being acquired.

## Revendications

1. Procédé de détermination de l'orientation d'une partie supérieure (1) d'un empilement de marchandises (2), plus particulièrement d'un empilement de tôles, une image de la couche supérieure de l'empilement de marchandises (2) étant enregistrée par un dispositif d'enregistrement d'image (6) et une orientation relative de la couche supérieure étant déterminée par un module d'analyse d'image à partir de l'image enregistrée, **caractérisé en ce qu'**une première image (15) d'une première position (7) de l'empilement de marchandises (2) et une deuxième image (16) d'une deuxième position (8) de l'empilement de marchandises (2) étant enregistrées, une analyse d'image étant effectuée par un module d'analyse et de comparaison d'image (13) pour chaque image (15, 16), un contour (17) étant extrait lors de l'analyse d'image et, dans la première image (15), une première information de position (18) et, dans la deuxième image (16), une deuxième information de position (19), étant déterminées et une distance (21) étant déterminée à partir de la première information de position (18) et de la deuxième information de position (19), un modèle de pièces (22) étant créé par le module d'analyse et de comparaison d'image (13) à partir des contours (17) extraits et de la distance (21), ce modèle étant comparé avec un modèle de référence (23) préenregistré et une information de transformation (9) étant déterminée à partir d'un écart entre le modèle de pièces (22) et le modèle de référence (23).

2. Procédé selon la revendication 1, **caractérisé en ce que** l'information de transformation (9) est déterminée sous la forme d'une représentation à décalage 2D et/ou d'une représentation polaire.

3. Procédé selon l'une des revendications 1 ou 2, **caractérisé en ce que** l'information de transformation (9) est transmise à un dispositif de manipulation (3) et est appliquée par celui-ci à l'empilement de marchandises (2) et/ou à la partie supérieure (1) de l'empilement de marchandises (2).

4. Procédé selon l'une des revendications 1 à 3, **caractérisé en ce qu'**une détection de pièces étant déterminée lors de l'analyse d'image.

5. Procédé selon l'une des revendications 1 à 4, **caractérisé en ce que** l'analyse d'image est effectuée comme une comparaison de niveaux de gris avec une analyse des valeurs seuils.

6. Procédé selon l'une des revendications 1 à 5, **caractérisé en ce que** le modèle de référence (23) est transmis par un système de construction ou de planification.

7. Procédé selon l'une des revendications 1 à 6, **caractérisé en ce que**, pour le modèle de référence (23), la première position (7) et la deuxième position (8) sont déterminées à l'aide d'une analyse de contour.

8. Procédé selon l'une des revendications 1 à 7, **caractérisé en ce que** le dispositif d'enregistrement d'image (6) est déplacé vers la première (7) et la deuxième position (8) par rapport à l'empilement de marchandises (2) ou vers un dispositif de stockage et de transport (5).

9. Procédé selon l'une des revendications 1 à 8, **caractérisé en ce que**, dans le cas d'enregistrements successifs des images, une distance d'enregistrement est détectée et, partir des distances d'enregistrements successives, une différence est déterminée et comparée avec une distance de référence.

10. Procédé selon l'une des revendications 1 à 9, **caractérisé en ce que**, lors de l'analyse d'image, un contour (27) supplémentaire est extrait, pour lequel une troisième information de position (28) est déterminée.

11. Dispositif d'alimentation pour une machine-outil (4), plus particulièrement une presse plieuse, comprenant un dispositif de logement d'empilement (5), un dispositif d'enregistrement d'image (6), un module d'analyse et de comparaison d'image (13) et un dispositif de manipulation de pièces (3), **caractérisé en ce que** le dispositif d'alimentation est conçu pour la réalisation d'un procédé selon des revendications 1 à 10 et le dispositif de manipulation de pièces (3) comprend un moyen d'entraînement contrôlable de manière sélective.

12. Dispositif d'alimentation selon la revendication 11, **caractérisé en ce que** le dispositif d'enregistrement d'image (6) comprend une pluralité de moyens d'enregistrement d'images.

13. Dispositif d'alimentation selon l'une des revendications 11 ou 12, **caractérisé en ce que** le dispositif d'enregistrement d'image (6) comprend un moyen d'enregistrement d'image et un dispositif de pivotement.

14. Dispositif d'alimentation selon l'une des revendications 11 à 13, **caractérisé en ce que** le dispositif d'enregistrement d'image (6) comprend un dispositif d'éclairage.

15. Dispositif d'alimentation selon l'une des revendications 11 à 14, **caractérisé en ce que** le dispositif d'enregistrement d'image (6) est disposé sur le dispositif de manipulation de pièces (3).

16. Dispositif d'alimentation selon l'une des revendications 11 à 15, **caractérisé en ce que** le dispositif d'enregistrement d'image (6) comprend un dispositif de mesure de distance.

17. Dispositif d'alimentation selon l'une des revendications 11 à 16, **caractérisé en ce que** les faisceaux forment, lors de l'enregistrement de la première et de la deuxième image, un angle aigu par rapport à la normale de la couche du dessus.
